(19) Europäisches Patentamt
European Patent Office
Office européen des brevets

(11) EP 2 058 766 A2

(12) EUROPEAN PATENT APPLICATION

(43) Date of publication:
13.05.2009 Bulletin 2009/20

(51) Int Cl.:
G06T 17/20 (2006.01)

(21) Application number: 08167772.6

(22) Date of filing: 28.10.2008

(84) Designated Contracting States:
AT BE BG CH CY CZ DE DK EE ES FI FR GB GR HR HU IE IS IT LI LT LU LV MC MT NL NO PL PT RO SE SI SK TR
Designated Extension States:
AL BA MK RS

(30) Priority: 01.11.2007 US 984412 P
17.10.2008 US 288216

(71) Applicant: Siemens Corporate Research, INC.
Princeton, NJ 08540 (US)

(72) Inventors:
• Melkisetoglu, Rupen
  Princeton, NJ 08540 (US)
• Zouhar, Alexander
  Plainsboro, NJ 08536 (US)
• Fang, Tong
  Morganville, NJ 07751 (US)

(74) Representative: Clarke, Alison Clare
Haseltine Lake
Redcliff Quay
120 Redcliff Street
Bristol
BS1 6HU (GB)

(54) **Method and system for detection of concha and intertragal notch point in 3D undetailed ear impressions**

(57) A method and system for detecting the concha and intertragal notch in an undetailed 3D ear impression is disclosed. The concha is detected by searching vertical scan lines in a region surrounding the aperture using a two-pass method. The intertragal notch is detected based on a bottom contour of the 3D undetailed ear impression and a local coordinate system defined for the 3D undetailed ear impression.

**FIG. 1**

```
Receive 3D Undetailed Ear Impression          102
        ↓
Detect Bottom Plane of 3D Undetailed          104
        Ear Impression
        ↓
Detect Aperture in 3D Undetailed Ear          106
        Impression
        ↓
Define Local Coordinate System of             108
    3D Undetailed Ear Impression
        ↓                        ↓
110                              112
Detect Concha in 3D Undetailed   Detect Intertragal Notch in 3D
    Ear Impression                  Undetailed Ear Impression
```

## Description

This application claims the benefit of U.S. Provisional Application No. 60/984,412, filed November 1, 2007, the disclosure of which is herein incorporated by reference.

### BACKGROUND OF THE INVENTION

The present invention generally relates to detection of anatomic features in 3D undetailed ear impressions, and more particularly to detecting the concha and the intertragal notch point in 3D undetailed ear impressions.

A 3D undetailed ear impression is a 3D data of an ear generated by a 3D scan of a patient's ear. 3D undetailed ear impressions can be used to manually or automatically generate hearing aid shells that fit a patient's ear. A typical 3D undetailed ear impression contains 30,000 points, which include important anatomic landmarks or features. In order to generate hearing aid shells automatically, feature recognition must be performed on a 3D undetailed ear impression to detect features of the impression such as the ear canal, aperture, concha, tragus, helix, intertragal notch, and crus. Feature detection is a sequential process in the sense that certain features are required in order to detect other features. The concha point and intertragal notch point are features which can be used to locate other features. Accordingly, methods for accurately detecting the concha and the intertragal notch in undetailed 3D ear impressions are desirable.

### BRIEF SUMMARY OF THE INVENTION

Embodiments of the present invention provide robust, fully automatic detection of the concha and the intertragal notch on a 3D undetailed ear impression. Embodiments of the present invention detect the concha by searching vertical scan lines in a region surrounding the aperture using a two-pass method. Embodiments of the present invention detect the intertragal notch based on a bottom contour of the 3D undetailed ear impression and a local coordinate system defined for the 3D undetailed ear impression.

In one embodiment of the present invention, a set of contours is generated at a plurality of vertical scan levels in a region surrounding an aperture in a 3D undetailed ear impression. It is then sequentially determined for each of vertical scan levels whether there are more than one and less than four contours at the scan level. For a vertical scan level with more than one and less four contours, a first contour is classified as an aperture contour and a second contour is classified as a concha contour or a helix contour. If the second contour is classified as a concha contour, a concha point is detected in the 3D undetailed ear impression by projecting a center of the concha contour to the 3D undetailed ear impression. If there are no vertical scan levels with more than one and less than four contours, or if no contours are classified as concha contours, a second pass of the vertical scan levels is performed. In the second pass, projection vectors are generated for each contour at a vertical scan level below an aperture contour. A maximum projection on a second principle component of a bottom contour is determined for each contour below the aperture contour. An average point is determined of points on a contour having a largest maximum projection, and a concha point is detected in the 3D undetailed ear impression by projecting the average point to a surface of the 3D undetailed ear impression.

In another embodiment of the present invention, a bottom contour of the 3D undetailed ear impression is smoothed. A plurality of projection vectors is generated for the bottom contour of the 3D undetailed ear impression. A first point is determined on the bottom contour at which a projection vector having a maximum projection on an x-direction of a local coordinate system of the 3D undetailed ear impression originates. A second point is detected on the bottom contour that is furthest from the first point, and an intertragal notch point is detected in the 3D undetailed ear impression by projecting the second point to a surface of the 3D undetailed ear impression.

These and other advantages of the invention will be apparent to those of ordinary skill in the art by reference to the following detailed description and the accompanying drawings.

### BRIEF DESCRIPTION OF THE DRAWINGS

FIG. 1 illustrates a method for feature detection in a 3D undetailed ear impression according to an embodiment of the present invention;

FIG. 2 illustrates an exemplary 3D undetailed ear impression;

FIG. 3 illustrates bottom plane detection for an exemplary 3D undetailed ear impression;

FIG. 4 illustrates aperture detection for an exemplary 3D undetailed ear impression;

FIG. 5 illustrates a schematic top view of aperture profile contour lines;

FIGS. 6A and 6B illustrate an LCS of a right ear impression and a left ear impression, respectively;

FIGS. 7A and 7B illustrate a method for detecting the concha in a 3D undetailed ear impression according to an embodiment of the present invention;

FIG. 8 illustrates contours generated by vertical scans in a region surrounding the aperture;

FIG. 9 illustrates examples of vertical scan levels having multiple contours;

FIG. 10 illustrates an exemplary undetailed ear impression in which each vertical scan level contains one contour;

FIG. 11 illustrates projection vectors for an exemplary contour;

FIG. 12 illustrates a method of detecting the intertragal notch in a 3D undetailed ear impression according to an embodiment of the present invention;

FIG. 13 illustrates the LCS and the bottom contour for an exemplary 3D undetailed ear impression; and

FIG. 14 is a high level block diagram of a computer capable of implementing the present invention.

DETAILED DESCRIPTION OF EXEMPLARY EMBODIMENTS

The present invention relates to methods for detecting the concha and the intertragal notch in a 3D undetailed ear impression. Embodiments of the present invention are described herein to give a visual understanding of the side detection method. A digital image is often composed of digital representations of one or more objects (or shapes). The digital representation of an object is often described herein in terms of identifying and manipulating the objects. Such manipulations are virtual manipulations accomplished in the memory or other circuitry / hardware of a computer system. Accordingly, is to be understood that embodiments of the present invention may be performed within a computer system using data stored within the computer system. For example, according to various embodiments of the present invention, electronic data representing a 3D undetailed ear impression is manipulated within a computer system in order to determine whether the impression is of a left or right ear.

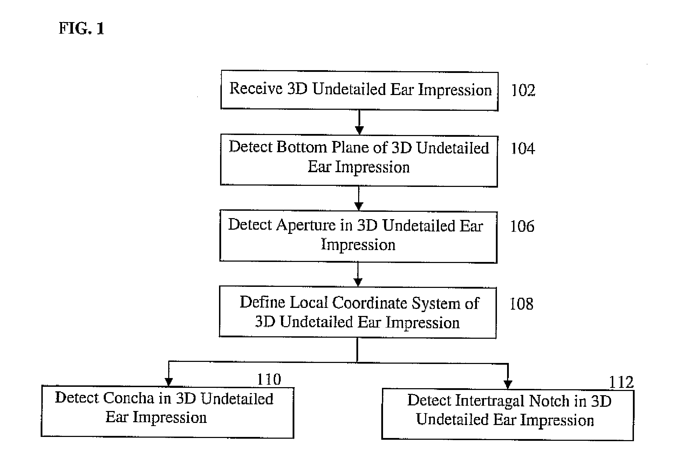

FIG. 1 illustrates a method for feature detection in a 3D undetailed ear impression according to an embodiment of the present invention. Referring to FIG. 1, at step 102, a 3D undetailed ear impression is received. A 3D undetailed ear impression is 3D data of an ear mold generated using a 3D scanner. The 3D undetailed ear impression resulting from a 3D scanner is typically a 3D point cloud representing the shape of the scanned ear. A computer system performing the steps of the method of FIG. 1 can receive the 3D point cloud by loading a previously scanned 3D point cloud from a memory or storage of the computer system or from a computer readable medium. Once the 3D point cloud is received, it can be triangulated using surface reconstruction techniques to generate a surface of the 3D undetailed ear impression.

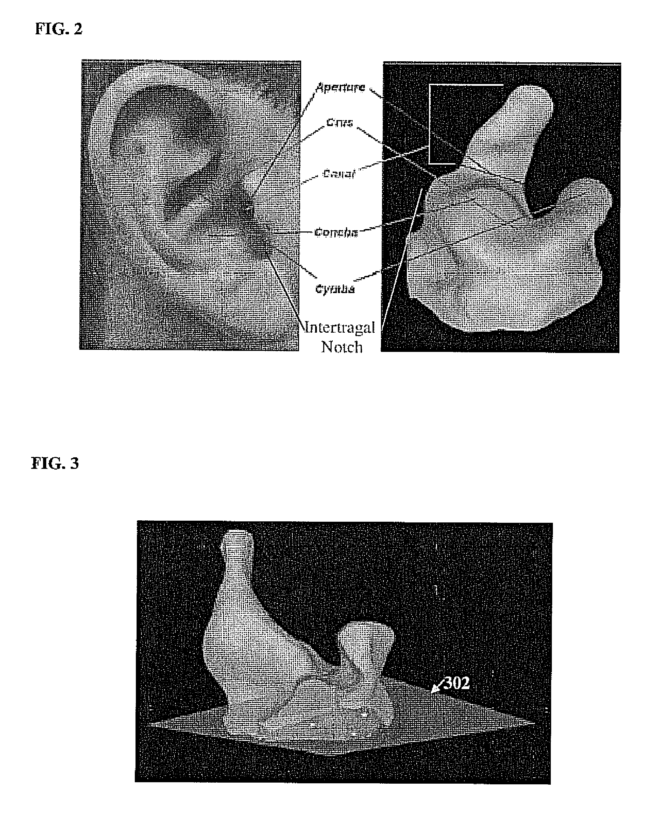

FIG. 2 illustrates an exemplary 3D undetailed ear impression. As illustrated in FIG. 2, image 202 shows an ear and image 204 shows a 3D undetailed ear impression corresponding to the ear of image 202. The 3D undetailed ear impression of image 204 is shown after triangulation. A 3D ear impression depicts important features of the ear, such as the ear canal, aperture, concha, tragus, helix (cymba), notch, and crus. Images 202 and 204 show locations of aperture, crus, ear canal, concha, and intertragal notch on the ear and their corresponding locations in the 3D undetailed ear impression. Due to the variable shape of the human ear, or as a result of 3D scanning defects, some of theses features may not be available in an undetailed impression. Accordingly, embodiments of the present invention for detecting the concha and the intertragal notch utilize features which are available in every 3D undetailed ear impression.

Returning to FIG. 1, at step 104, the bottom plane of the 3D undetailed ear impression is detected. The bottom plane is a feature that is always available in a 3D undetailed ear impression. FIG. 3 illustrates bottom plane detection for an exemplary 3D undetailed ear impression. As shown in FIG. 3, the 3D undetailed ear impression has an open bottom. After the triangulation of the 3D point cloud, the boundary edges of the surface of the 3D undetailed ear impression form a boundary contour that is always the bottom of the impression. The first and second principal components of the contour are major and minor axes of the contour. The first and second principal components are used to determine the third component using the cross product. The third component defines a normal direction to the bottom plane. The center of the contour defines a point on the bottom plane, and the bottom plane is defined using the normal direction defined by the third component and the point information defined by the center of the contour. As illustrated in FIG. 3 bottom plane 302 is defined for a 3D undetailed ear impression

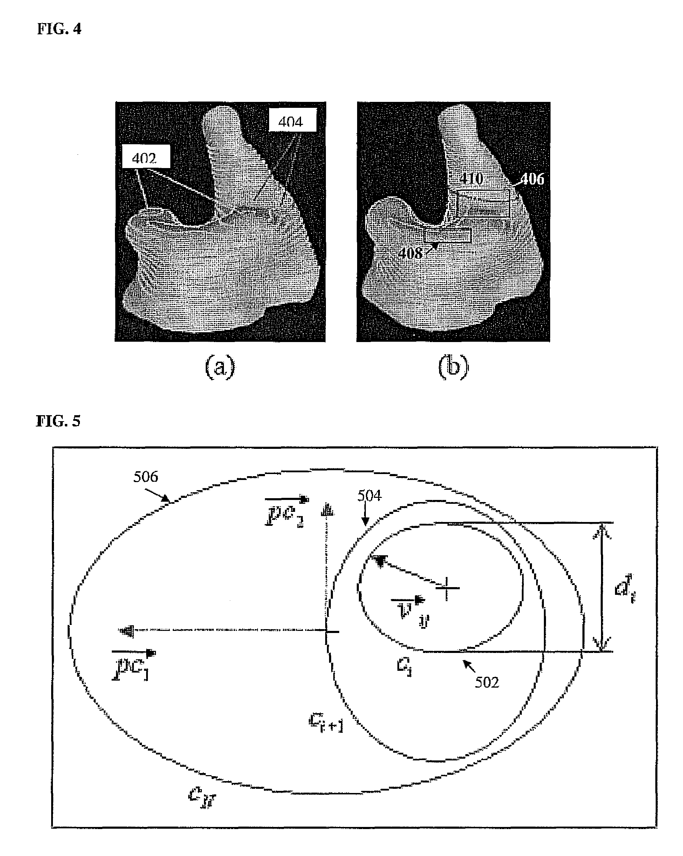

Returning to FIG. 1, at step 106, the aperture is detected in the 3D undetailed ear impression. The aperture is a feature that can be considered a characteristic contour that connects the canal with the rest of the impression body. The aperture is side independent and is most likely available on all 3D undetailed ear impressions. The detection of the aperture plane is based on the shape variety of vertically scanned contour lines. FIG. 4 illustrates aperture detection for an exemplary 3D undetailed ear impression. A vertical scan of the 3D undetailed ear impression surface results in a set of contours. Image (a) of FIG. 4 shows a set of contours resulting from a vertical scan of an ear impression. If more than one contour line exists at a particular scan level, some contour lines are removed, while one contour line is kept at each level. For example, in image (a) FIG. 4, contour lines 402 are removed, while keeping the contour lines 404 along the canal and lower portion of the ear impression. Usually the number of contour lines at one level will not exceed three. The remaining set of contour lines is referred to as the aperture profile. Image (b) of FIG. 4 shows the aperture profile. The aperture profile is extracted from the complete set of vertical scan lines starting at the canal tip downwards to the bottom of the surface. If there is only one contour at scan level i, it is directly considered as part of the aperture profile. If there is more than one contour line at scan level i, only the contour whose center has the minimal distance from the center of the contour extracted at scan level $i$-1 is kept as part of the aperture profile. Regions 406 and 408 of the aperture profile are locations of significant changes of contour shapes, and contour line 410 is the aperture contour.

Weighted filtering that assigns weights of higher importance to canal and concha areas is used on the first derivative of measures calculated on each scan line contour in order to extract an aperture profile function whose maximum value defines the contour index corresponding to the aperture scan line contour. The weighted filtering and the aperture profile function are expressed as:

$$val_i = f_i \cdot (d_i - d_{i-1}), \ f_i = 1 - i/N, \ 2 \leq i \leq N \tag{1}$$

$$pos = arg \ max_i (val_i) - 1, \ 1 \leq pos \leq N - 1. \tag{2}$$

In Equation (1), N denotes the number of contour lines. FIG. 5 illustrates a schematic top view of aperture profile contour lines. The smaller contours 502 and 504 depict canal and concha areas, respectively. Points of contour line $i$ are considered as vectors $\vec{v}_{ij}$ originating from the center of the contour line. The value $d_i$ measures the difference between the two maximum projection values of these vectors onto the second principal component $\vec{pc_2}$ of the lowest contour line $c_N$ (506). Accordingly, it is expected that the first-order backward difference $d_i - d_{i-1}$ has its maximum value at the desired object position, e.g., region 406 of FIG. 4. However, $d_i - d_{i-1}$ alone may not be robust enough to handle all cases. For example, objects with a shallow concha may be candidates for misclassifications, and contours below the expected aperture can be selected instead of the aperture. As a countermeasure, differences of subsequent $d_i$ are weighted with the factor $f_i$, which assigns a higher importance to the canal regions. Accordingly, Equation (1) selects the contour at which the greatest weighted $d_i$ change from the previous contour occurs, and Equation (2) determines the aperture contour, which is one contour position above the contour selected by Equation (2).

Returning to FIG. 1, at step 108, a local coordinate system (LCS) of the 3D undetailed ear impression is defined. The LCS of the 3D undetailed ear impression can be defined based on the bottom plane and the aperture of the 3D undetailed ear impression. The y direction of the LCS is defined based on the bottom plane. The third component of the contour can be considered as the y direction of the LCS after its orientation is corrected to be from the mass center of the 3D undetailed ear impression through the bottom plane. The x direction of the 3D undetailed ear impression is defined based on the aperture plane and the y direction. A direction can be defined from the center of the aperture contour (Center$_{AP}$) to the center of the contour that is one below the aperture contour (Center$_{AP-1}$). The x direction of the LCS of the 3D undetailed ear impression is defined as the cross product the y direction of the LCS and the direction defined from Center$_{AP}$ to Center$_{AP-1}$. The z direction is defined based on the x and y direction. The z direction of the LCS of the 3D undetailed ear impression is defined as the cross product of the x direction and the y direction of the LCS. Accordingly, the x, y, and z directions define the LCS of the 3D undetailed ear impression.

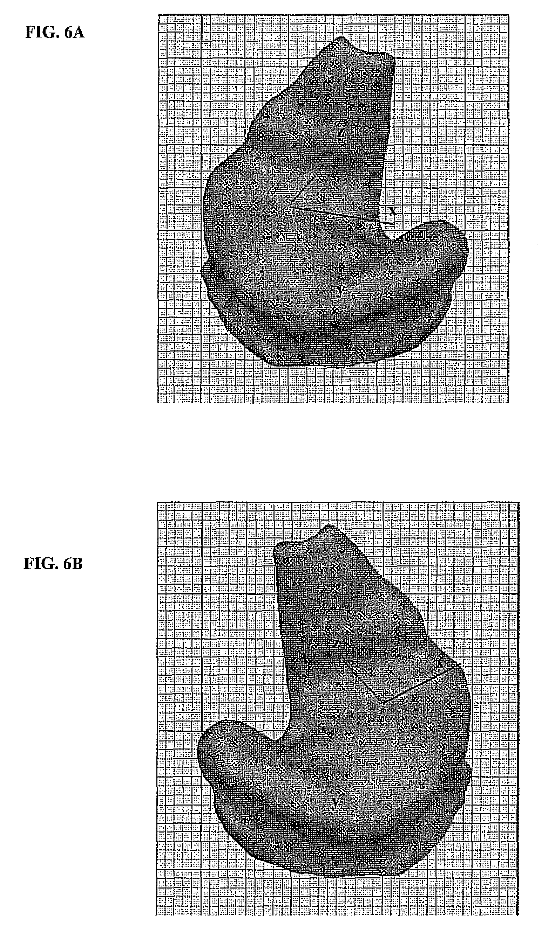

FIGS. 6A and 6B illustrate an LCS of a right ear impression and a left ear impression, respectively. As illustrated in FIG. 6A, in the right 3D undetailed ear impression, the y direction of the LCS points from the center of mass of the impression to the bottom of the impression, the z direction points from the aperture to the canal opening, and the x direction points from the concha to the helix. As illustrated in FIG. 6B, in the left 3D undetailed ear impression, the y direction of the LCS points from the center of mass of the impression to the bottom of the impression and the z direction points from the aperture to the canal opening. However, the x direction of the LCS for the left ear impression is not direction from the concha to the helix, but instead directed from the helix toward the concha. Accordingly, it is the negative x direction in the left ear impression that points from the concha toward the helix.

Returning to FIG. 1, at step 10, the concha is detected and at step 112, the intertragal notch is detected. The detection of the concha and intertragal notch can be performed independently with respect to each other, and each is detected based on the bottom plane, aperture, and LCS of the 3D undetailed ear impression. Methods for detecting the concha and the intertragal notch based on the bottom plane, aperture, and LCS of are described in greater detail below.

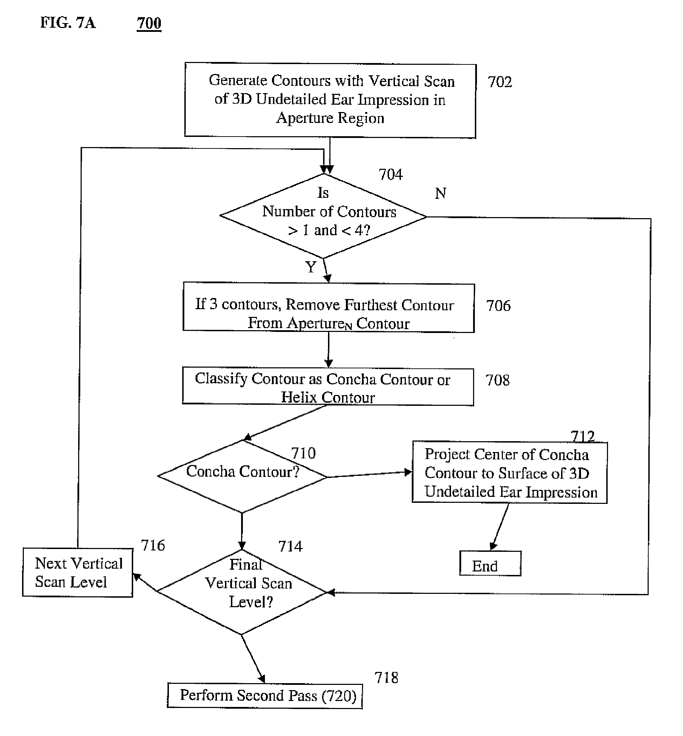

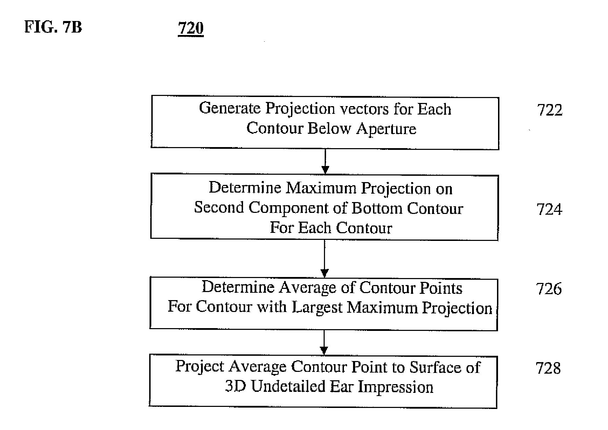

FIGS. 7A and 7B illustrate a method for detecting the concha in a 3D undetailed ear impression according to an embodiment of the present invention. The concha detection method of FIGS. 7A and 7B is performed in two passes. The first pass 700 is illustrated in FIG. 7A, and the second pass 720 is illustrated in FIG. 7B. If the concha is not detected in the first pass 700, then the method proceeds to the second pass 720. The concha is a hollow bowl like portion of the 3D undetailed ear impression that is close to the ear canal, and the peak point of this bowl is the concha point.

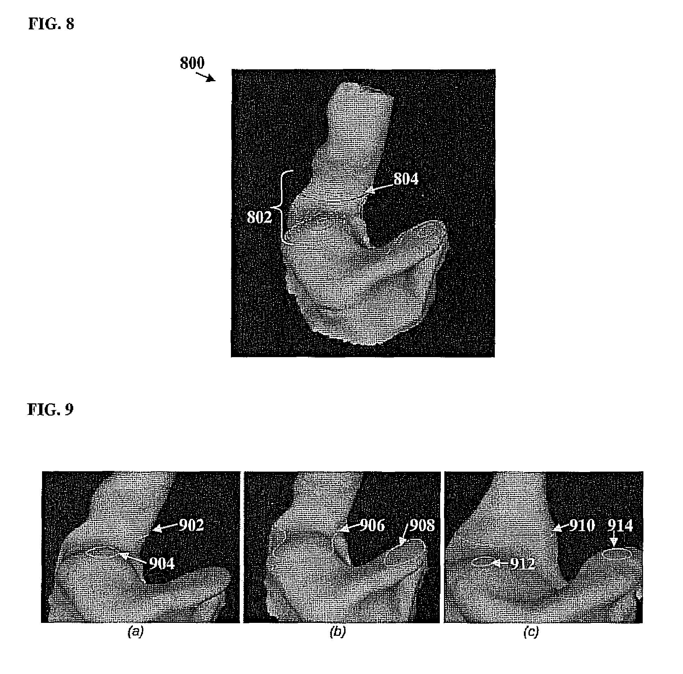

As illustrated in FIG. 7A, at step 702, a set of contours are generated by performing vertical scans of the 3D undetailed ear impression in a region surrounding the aperture. The vertical scans are performed at an orientation corresponding to the bottom plane orientation. Accordingly, the contours generated are parallel with the bottom plane. FIG. 8 illustrates contours generated by vertical scans in a region surrounding the aperture. As illustrated in FIG. 8, image 800 is an undetailed ear impression showing a band of contours 802 at different vertical scan levels above and below an aperture contour 804. The first pass method 700 of FIG. 7A independently analyzes the contours at each vertical scan level, from the bottom to the top of the band of contours, to search for the concha point.

Returning to FIG. 7A, at step 704, it is determined whether there are more than one and less than four counters at the current scan level. When vertical scans are performed in the region surrounding the aperture, there may be more than one closed contour at a given vertical scan level due to the concha and helix in this region. When there are two or three contours at a given vertical scan level, the method searches the contours at that vertical scan level for the concha point and proceeds to step 706. When there is only one contour or more than three contours at a vertical scan level, the method proceeds to step 714. FIG. 9 illustrates examples of vertical scan levels having multiple contours. In each case of multiple contours for a scan line, the contour closest to the aperture center is considered the aperture contour for that scan line, and is referred to as the $aperture_N$ contour. As illustrated in FIG. 9, image (a) shows a vertical scan level having two contours, the aperture contour 902 and a concha contour 904. Image (b) shows a vertical scan level having two contours, the $aperture_N$ contour 906 and a helix contour 908. Image (c) shows a vertical scan level having three contours, the $aperture_N$ contour 910, a concha contour 912, and a helix contour 914.

Returning to FIG. 7A, at step 706, if there are three contours at the current vertical scan, the contour furthest from the aperture contour is removed. By removing the contour furthest from the $aperture_N$ contour, only the $aperture_N$ contour and one other contour remains. For example, in the case of image (c) of FIG. 9, the contour 912 or 914 that is furthest from the $aperture_N$ contour 910 is removed in order to reduce this case to have two contours like image (a) or image (b).

Returning to FIG. 7A, at step 708 the contour is classified as either a concha contour or a helix contour. The contour in the vertical scan level that is not the $aperture_N$ contour is classified as either a concha contour or a helix contour based on an angle comparison using the second principle component of the bottom plane. The second principle component of the bottom plane is corrected to be aligned with the z-direction of the LCS. A difference vector taken from the contour center to the $aperture_N$ contour center is then compared with the corrected second principle component. If the angle between the difference vector and the corrected second principle component of the bottom plan is greater than a threshold value, the contour is a helix contour, and if the angle is less than or equal to the threshold value, the contour is a concha contour. At step 710, if the contour is classified as a concha contour, the method proceeds to step 712, and if the contour is classified as a helix contour, the method proceeds to step 714.

At step 712, the center of the detected concha contour is projected to the surface of the 3D ear impression. The resulting point is the detected concha point in the 3D undetailed ear impression. The concha detection method then terminates. The concha point can then be output, for example by storing the detected conch point location in a computer readable medium, or storage or memory of a computer system. The detected concha point can be used for automatic detection of other anatomic features in the 3D undetailed ear impression.

At step 714, no concha point has been detected at a vertical scan level, and it is determined whether that scan level is the final vertical scan level for the band of contours in the region surrounding the aperture. If the vertical scan level is not the final vertical scan level, the method proceeds to step 716. If the vertical scan level is the final vertical scan level, the method proceeds to step 718. At step 716, the method moves to the next vertical scan level above the previous vertical scan level, and returns to step 704. Accordingly, the method searches each vertical scan level for a concha point as described above until a concha point is detected or all of the vertical scan levels are searched. At step 718, when all of the vertical scan levels have been searched and no concha point has been detected, the method proceeds to the second pass 720, which is illustrated in FIG. 7B.

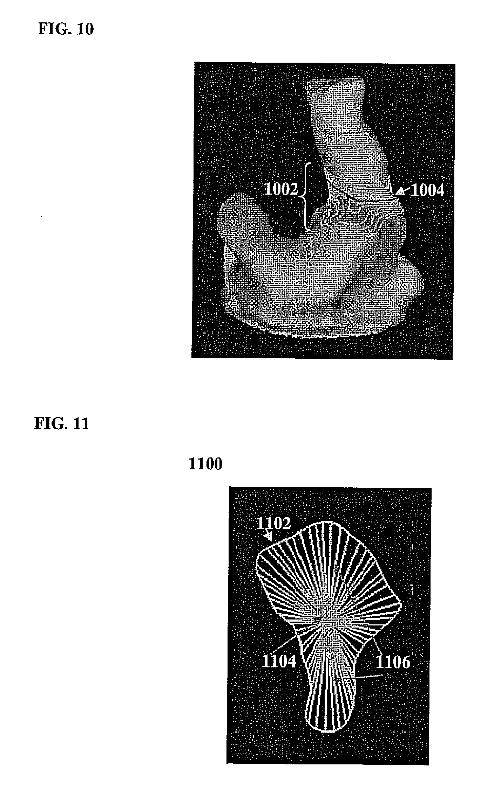

Referring to FIG. 7B, the second pass method 720 is performed when no concha point is detected using the first pass method 700 of FIG. 7A. For example, the second pass method 720 is performed when only there is only one contour at each vertical scan level. FIG. 10 illustrates an exemplary undetailed ear impression in which each vertical scan level contains one contour. As illustrated in FIG. 10, within the band of contours 1002 in the region surrounding the aperture contour 1004, each vertical scan level contains one closed contour.

Returning to FIG. 7B, at step 722, projection vectors are generated for each contour below the aperture contour. The projection vectors are generated for a contour by projecting each point on the contour to the center of the contour. FIG. 11 illustrates projection vectors for an exemplary contour. As illustrated in FIG. 11, image 1100 shows projection vectors 1106 generated for a contour 1102 by projecting each point on the contour 1102 to the center 1104 of the contour 1102.

Returning to step 724, a maximum projection on the second component of the bottom contour is determined for each contour below the aperture contour. In order to determine the maximum projection for a given contour, each projection vector generated for the contour is compared with the second principle component of the bottom contour by taking the dot product of the projection vector and the second principle component and the bottom contour. The maximum projection for a contour is the largest dot product value resulting from comparing each projection vector of the contour with the second principle component of the bottom plane. The maximum projection is determined for each contour.

At step 726, the average of the contour points is determined for the contour having the largest maximum projection. The maximum projections calculated for all of the contours are compared, and the contour having the largest maximum projection is selected. The average of all of the points on the selected contour is determined.

At step 728, the average contour point of the selected contour is projected onto the surface of the 3D undetailed ear impression. The resulting point is the detected concha point in the 3D undetailed ear impression. The concha point can then be output, for example by storing the detected conch point location in a computer readable medium, or storage or memory of a computer system. The detected concha point can be used for automatic detection of other anatomic features in the 3D undetailed ear impression.

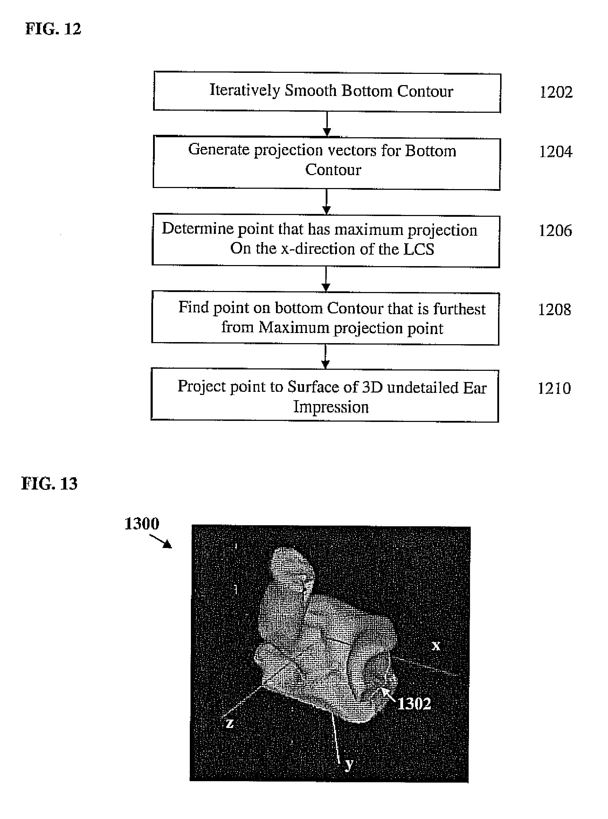

FIG. 12 illustrates a method of detecting the intertragal notch in a 3D undetailed ear impression according to an embodiment of the present invention. The method of FIG. 12 utilizes the bottom contour and LCS of the 3D undetailed ear impression to detect the intertragal notch point. The intertragal notch point lies on the opposite direction of the local x-direction and separates the tragus from the antitragus by creating a peak point. FIG. 13 illustrates the LCS and the bottom contour for an exemplary 3D undetailed ear impression. As illustrated in FIG. 13, image 1300 is a 3D undetailed ear impression showing the bottom contour 1302 and x, y, and z, directions of the local coordinate system (LCS).

Referring to FIG. 12, at step 1202 the bottom contour is iteratively smoothed. The bottom contour can be smoothed several times using a Laplacian smoothing technique, which is well known to one skilled in the art.

At step 1204, projection vectors are generated for the bottom contour. The projection vectors are generated for the bottom contour by projecting each point on the bottom contour to the center of the bottom contour. Projection vectors generated for an exemplary contour are shown in FIG. 11, as described above.

At step 1206, a point on the bottom contour is determined that has the maximum projection on the x-direction of the LCS. Each projection vector is compared with the x-direction of the LCS by taking the dot product of each projection vector with the x-direction of the LCS. The point on the contour at which the projection vector with largest projection (dot product) value originates is determined as the maximum projection point.

At step 1208, a point on the bottom contour furthest from the maximum projection point is detected. At step 1210, the point on the bottom contour further from the maximum projection point is projected to the surface of the 3D undetailed ear impression. The resulting point is the detected intertragal notch point in the 3D undetailed ear impression. The intertragal notch point can then be output, for example by storing the detected conch point location in a computer readable medium, or storage or memory of a computer system. The detected intertragal notch point can be used for automatic detection of other anatomic features in the 3D undetailed ear impression.

Once the concha point and/or the intertragal notch point are detected in the 3D undetailed ear impression, additional anatomic features can be detected in the 3D undetailed ear impression. Accordingly, the automatic concha point and intertragal notch detection methods of an undetailed ear impression can be used in automatically generating hearing aid shells by detecting additional features needed to automatically generate hearing aid shells.

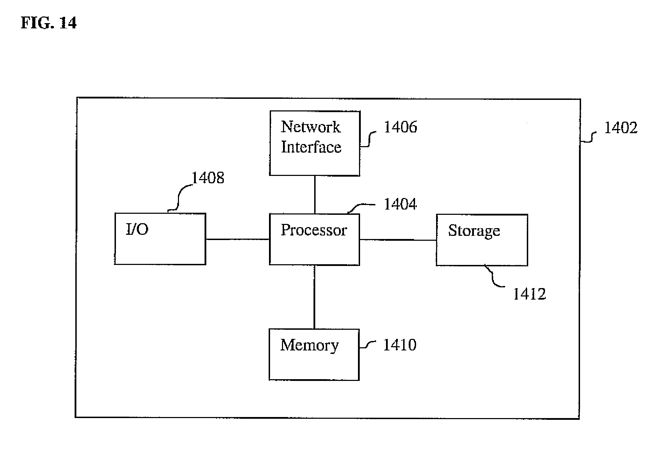

The above described methods for detection of the concha and intertragal notch in a 3D undetailed ear impression can be implemented on a computer using well-known computer processors, memory units, storage devices, computer software, and other components. A high level block diagram of such a computer is illustrated in FIG. 14. Computer 1402 contains a processor 1404 which controls the overall operation of the computer 1402 by executing computer program instructions which define such operation. The computer program instructions may be stored in a storage device 1412 (e.g., magnetic disk) and loaded into memory 1410 when execution of the computer program instructions is desired. Thus, the method steps of the methods of FIGS. 1, 7A, 7B, and 12, can be defined by the computer program instructions stored in the memory 1410 and/or storage 1412 and controlled by the processor 1404 executing the computer program instructions. Furthermore, the 3D undetailed ear impression can be stored as data in the memory 1410 and/or the storage 1412. The computer 1402 also includes one or more network interfaces 1406 for communicating with other devices via a network. The computer 1402 also includes other input/output devices 1408 that enable user interaction with the computer 1402 (e.g., display, keyboard, mouse, speakers, buttons, etc.) One skilled in the art will recognize that an implementation of an actual computer could contain other components as well, and that FIG. 14 is a high level representation of some of the components of such a computer for illustrative purposes.

The foregoing Detailed Description is to be understood as being in every respect illustrative and exemplary, but not restrictive, and the scope of the invention disclosed herein is not to be determined from the Detailed Description, but rather from the claims as interpreted according to the full breadth permitted by the patent laws. It is to be understood that the embodiments shown and described herein are only illustrative of the principles of the present invention and that various modifications may be implemented by those skilled in the art without departing from the scope and spirit of the invention. Those skilled in the art could implement various other feature combinations without departing from the scope and spirit of the invention.

## Claims

**1.** A method for concha detection in a 3D undetailed ear impression, comprising:

generating set of contours at a plurality of vertical scan levels in a region surrounding an aperture in the 3D undetailed ear impression;

sequentially determining for each of the plurality of vertical scan levels whether there are more than one and less than four contours at a scan level;

for a vertical scan level with more than one and less four contours, classifying a first contour as an aperture contour and a second contour as one of a concha contour and a helix contour;

if the second contour is classified as a concha contour, detecting a concha point in the 3D undetailed ear impression by projecting a center of the concha contour to the 3D undetailed ear impression.

2. The method of claim 1, wherein said step of classifying a first contour as an aperture contour and a second contour as one of a concha contour and a helix contour comprises:

removing a third contour furthest from the aperture contour.

3. The method of claim 1, wherein said step of classifying a first contour as an aperture contour and a second contour as one of a concha contour and a helix contour comprises:

correcting a second principle component of a bottom plane of the 3D undetailed ear impression to a z-direction of a local coordinate system of the 3D undetailed ear impression;

determining a difference vector from a center of the second contour to a center of the first contour;

determining an angle between the difference vector and the corrected second principle component;

if the angle is greater than a threshold value, classifying the second contour as a helix contour; and

if the angle is less than the threshold value, classifying the second contour as a concha contour.

4. The method of claim 1, further comprising:

if there are no vertical scan levels with more than one and less than four contours, or if no contours are classified as concha contours:

generating projection vectors for each contour at a vertical scan level below an aperture contour;

determining a maximum projection on a second principle component of a bottom contour for each contour below the aperture contour;

determining an average point of points on a contour having a largest maximum projection; and

detecting a concha point in the 3D undetailed ear impression by projecting the average point to a surface of the 3D undetailed ear impression.

5. The method of claim 4, wherein said step of generating projection vectors for each contour at a vertical scan level below an aperture contour comprises:

for each contour at a vertical scan level below the aperture contour, projecting each point on the contour to a center of the contour.

6. The method of claim 4, wherein said step of determining a maximum projection on a second principle component of a bottom contour for each contour below the aperture contour comprises:

calculating a dot product of each projection vector with a second principle component of a bottom contour of the 3D undetailed ear impression;

determining the maximum the maximum dot product for each contour.

7. The method of claim 4, further comprising:

detecting a bottom plane of the 3D undetailed ear impression;

detecting the aperture of the 3D undetailed ear impression; and

defining a local coordinate system (LCS) of the 3D undetailed ear impression based on the bottom plane and the aperture.

8. The method of claim 4, further comprising:

detecting an intertragal notch in the 3D undetailed ear impression.

9. A method for intertragal notch detection in a 3D undetailed ear impression, comprising:

smoothing a bottom contour of the 3D undetailed ear impression;
generating a plurality of projection vectors for the bottom contour of the 3D undetailed ear impression;
determining a first point on the bottom contour at which a projection vector having a maximum projection on an x-direction of a local coordinate system of the 3D undetailed ear impression originates;
detecting a second point on the bottom contour that is furthest from the first point; and
detecting an intertragal notch point by projecting the second point to a surface of the 3D undetailed ear impression.

10. The method of claim 9, further comprising:

detecting a bottom plane of the 3D undetailed ear impression;
detecting the aperture of the 3D undetailed ear impression; and
defining the local coordinate system of the 3D undetailed ear impression based on the bottom plane and the aperture.

11. The method of claim 9, wherein said step of generating a plurality of projection vectors for the bottom contour of the 3D undetailed ear impression comprises:

projecting each point on the bottom contour to a center of the bottom contour.

12. The method of claim 9, wherein said step of determining a first point on the bottom contour at which a projection vector having a maximum projection on an x-direction of a local coordinate system of the 3D undetailed ear impression comprises:

calculating a dot product of each projection vector with the x-direction of the local coordinate system; and
determining a point on the bottom contour at which a projection vector having the maximum dot product originates.

13. An apparatus for concha detection in a 3D undetailed ear impression, comprising:

means for generating set of contours at a plurality of vertical scan levels in a region surrounding an aperture in the 3D undetailed ear impression;
means for sequentially determining for each of the plurality of vertical scan levels whether there are more than one and less than four contours at a scan level;
means for classifying a first contour as an aperture contour and a second contour as one of a concha contour and a helix contour, for a vertical scan level with more than one and less four contours;
means for detecting a concha point in the 3D undetailed ear impression by projecting a center of the second contour to the 3D undetailed ear impression, if the second contour is classified as a concha contour.

14. The apparatus of claim 13, wherein said means for classifying a first contour as an aperture contour and a second contour as one of a concha contour and a helix contour comprises:

means for removing a third contour furthest from the aperture contour.

15. The apparatus of claim 13, wherein said means for classifying a first contour as an aperture contour and a second contour as one of a concha contour and a helix contour comprises:

means for correcting a second principle component of a bottom plane of the 3D undetailed ear impression to a z-direction of a local coordinate system of the 3D undetailed ear impression;
means for determining a difference vector from a center of the second contour to a center of the first contour;
means for determining an angle between the difference vector and the corrected second principle component;
means for classifying the second contour as a helix contour if the angle is greater than a threshold value; and
means for classifying the second contour as a concha contour if the angle is less than the threshold value.

16. The apparatus of claim 13, further comprising:

means for generating projection vectors for each contour at a vertical scan level below an aperture contour, if there are no vertical scan levels with more than one and less than four contours, or if no contours are classified as concha contours;

means for determining a maximum projection on a second principle component of a bottom contour for each contour below the aperture contour;

means for determining an average point of points on a contour having a largest maximum projection; and

means for detecting a concha point in the 3D undetailed ear impression by projecting the average point to a surface of the 3D undetailed ear impression.

**17.** An apparatus for intertragal notch detection in a 3D undetailed ear impression, comprising:

means for smoothing a bottom contour of the 3D undetailed ear impression;

means for generating a plurality of projection vectors for the bottom contour of the 3D undetailed ear impression;

means for determining a first point on the bottom contour at which a projection vector having a maximum projection on an x-direction of a local coordinate system of the 3D undetailed ear impression originates;

means for detecting a second point on the bottom contour that is furthest from the first point; and

means for detecting an intertragal notch point by projecting the second point to a surface of the 3D undetailed ear impression.

**18.** The apparatus of claim 17, further comprising:

means for detecting a bottom plane of the 3D undetailed ear impression;

means for detecting the aperture of the 3D undetailed ear impression; and

means for defining the local coordinate system of the 3D undetailed ear impression based on the bottom plane and the aperture.

**19.** The apparatus of claim 17, wherein said means for generating a plurality of projection vectors for the bottom contour of the 3D undetailed ear impression comprises:

means for projecting each point on the bottom contour to a center of the bottom contour.

**20.** The apparatus of claim 17, wherein said means for determining a first point on the bottom contour at which a projection vector having a maximum projection on an x-direction of a local coordinate system of the 3D undetailed ear impression comprises:

means for calculating a dot product of each projection vector with the x-direction of the local coordinate system; and

means for determining a point on the bottom contour at which a projection vector having the maximum dot product originates.

**21.** A computer readable medium encoded with computer executable instructions for concha detection in a 3D undetailed ear impression, the computer executable instructions defining steps comprising:

generating set of contours at a plurality of vertical scan levels in a region surrounding an aperture in the 3D undetailed ear impression;

sequentially determining for each of the plurality of vertical scan levels whether there are more than one and less than four contours at a scan level;

for a vertical scan level with more than one and less four contours, classifying a first contour as an aperture contour and a second contour as one of a concha contour and a helix contour;

if the second contour is classified as a concha contour, detecting a concha point in the 3D undetailed ear impression by projecting a center of the concha contour to the 3D undetailed ear impression.

**22.** The computer readable medium of claim 21, wherein the computer executable instructions defining the step of classifying a first contour as an aperture contour and a second contour as one of a concha contour and a helix contour comprise computer executable instructions defining the step of:

removing a third contour furthest from the aperture contour.

23. The computer readable medium of claim 21, wherein the computer executable instructions defining the step of classifying a first contour as an aperture contour and a second contour as one of a concha contour and a helix contour comprise computer executable instructions defining the steps of:

correcting a second principle component of a bottom plane of the 3D undetailed ear impression to a z-direction of a local coordinate system of the 3D undetailed ear impression;
determining a difference vector from a center of the second contour to a center of the first contour;
determining an angle between the difference vector and the corrected second principle component;
if the angle is greater than a threshold value, classifying the second contour as a helix contour; and
if the angle is less than the threshold value, classifying the second contour as a concha contour.

24. The computer readable medium of claim 21, further comprising computer executable instructions defining the steps of:

if there are no vertical scan levels with more than one and less than four contours, or if no contours are classified as concha contours:

generating projection vectors for each contour at a vertical scan level below an aperture contour;
determining a maximum projection on a second principle component of a bottom contour for each contour below the aperture contour;
determining an average point of points on a contour having a largest maximum projection; and
detecting a concha point in the 3D undetailed ear impression by projecting the average point to a surface of the 3D undetailed ear impression.

25. A computer readable medium encoded with computer executable instructions for intertragal notch detection in a 3D undetailed ear impression, the computer executable instructions defining steps comprising:

smoothing a bottom contour of the 3D undetailed ear impression;
generating a plurality of projection vectors for the bottom contour of the 3D undetailed ear impression;
determining a first point on the bottom contour at which a projection vector having a maximum projection on an x-direction of a local coordinate system of the 3D undetailed ear impression originates;
detecting a second point on the bottom contour that is furthest from the first point; and
detecting an intertragal notch point by projecting the second point to a surface of the 3D undetailed ear impression.

26. The computer readable medium of claim 25, further comprising computer executable instructions defining the steps of:

detecting a bottom plane of the 3D undetailed ear impression;
detecting the aperture of the 3D undetailed ear impression; and
defining the local coordinate system of the 3D undetailed ear impression based on the bottom plane and the aperture.

27. The computer readable medium of claim 25, wherein the computer executable instructions defining the step of generating a plurality of projection vectors for the bottom contour of the 3D undetailed ear impression comprise computer executable instructions defining the step of:

projecting each point on the bottom contour to a center of the bottom contour.

28. The computer readable medium of claim 25, wherein the computer executable instructions defining the step of determining a first point on the bottom contour at which a projection vector having a maximum projection on an x-direction of a local coordinate system of the 3D undetailed ear impression comprise computer executable instructions defining the steps of:

calculating a dot product of each projection vector with the x-direction of the local coordinate system; and
determining a point on the bottom contour at which a projection vector having the maximum dot product originates.

**FIG. 1**

```
┌──────────────────────────────────────┐
│ Receive 3D Undetailed Ear Impression │  102
└──────────────────────────────────────┘
                   │
                   ▼
┌──────────────────────────────────────┐
│ Detect Bottom Plane of 3D Undetailed │  104
│            Ear Impression            │
└──────────────────────────────────────┘
                   │
                   ▼
┌──────────────────────────────────────┐
│  Detect Aperture in 3D Undetailed Ear│  106
│               Impression             │
└──────────────────────────────────────┘
                   │
                   ▼
┌──────────────────────────────────────┐
│   Define Local Coordinate System of  │  108
│     3D Undetailed Ear Impression     │
└──────────────────────────────────────┘
          │                    │
          ▼                    ▼
        110                   112
┌───────────────────────┐  ┌──────────────────────────┐
│ Detect Concha in 3D   │  │ Detect Intertragal Notch │
│  Undetailed           │  │          in 3D           │
│  Ear Impression       │  │ Undetailed Ear Impression│
└───────────────────────┘  └──────────────────────────┘
```

**FIG. 2**

**FIG. 3**

FIG. 4

(a)          (b)

FIG. 5

**FIG. 6A**

**FIG. 6B**

**FIG. 7A**    <u>**700**</u>

Generate Contours with Vertical Scan
of 3D Undetailed Ear Impression in
Aperture Region | 702

704

Is
Number of Contours
> 1 and < 4?    N

Y

If 3 contours, Remove Furthest Contour
From Aperture$_N$ Contour | 706

Classify Contour as Concha Contour or
Helix Contour | 708

710
Concha Contour?

<u>712</u>

Project Center of Concha
Contour to Surface of 3D
Undetailed Ear Impression

End

716 | Next Vertical
Scan Level

714
Final
Vertical Scan
Level?

718

Perform Second Pass (720)

**FIG. 7B**          <u>720</u>

```
┌─────────────────────────────────┐
│   Generate Projection vectors for Each   │      722
│        Contour Below Aperture            │
└─────────────────────────────────┘
                 │
                 ▼
┌─────────────────────────────────┐
│     Determine Maximum Projection on      │
│   Second Component of Bottom Contour     │      724
│            For Each Contour              │
└─────────────────────────────────┘
                 │
                 ▼
┌─────────────────────────────────┐
│    Determine Average of Contour Points   │      726
│  For Contour with Largest Maximum Projection │
└─────────────────────────────────┘
                 │
                 ▼
┌─────────────────────────────────┐
│   Project Average Contour Point to Surface of │   728
│        3D Undetailed Ear Impression      │
└─────────────────────────────────┘
```

**FIG. 8**

**FIG. 9**

FIG. 10

FIG. 11

1100

**FIG. 12**

| | |
|---|---|
| Iteratively Smooth Bottom Contour | 1202 |

↓

| | |
|---|---|
| Generate projection vectors for Bottom Contour | 1204 |

↓

| | |
|---|---|
| Determine point that has maximum projection On the x-direction of the LCS | 1206 |

↓

| | |
|---|---|
| Find point on bottom Contour that is furthest from Maximum projection point | 1208 |

↓

| | |
|---|---|
| Project point to Surface of 3D undetailed Ear Impression | 1210 |

**FIG. 13**

1300

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 98441207 P